# EUROPEAN PATENT SPECIFICATION

(11) **EP 2 025 588 B1**
(45) Date of publication and mention of the grant of the patent: **22.12.2010**
(21) Application number: 08252430.7
(22) Date of filing: 17.07.2008
(51) Int. Cl.: B62K 11/02

(54) **Frame of motorcycle and motorcycle**
Motorradrahmen und Motorrad
Cadre de motocyclette et motocyclette

(30) Priority: 19.07.2007 JP 2007188840; 19.06.2008 JP 2008160083
(43) Date of publication of application: 18.02.2009
(73) Proprietor: Yamaha Hatsudoki Kabushiki Kaisha, Shizuoka-ken Shizuoka 438-8501 (JP)
(72) Inventor: Okamoto, Naoki, Iwata-shi, Shizuoka-ken 438-8501 (JP)
(74) Representative: Lamb, Martin John Carstairs

(56) References cited:
- EP-A- 1 775 207
- WO-A-2004/071858
- FR-A- 2 737 877
- JP-A- 1 164 689

## Description

### FIELD OF THE INVENTION

The present invention relates to a frame structure of a motorcycle.

### BACKGROUND TO THE INVENTION

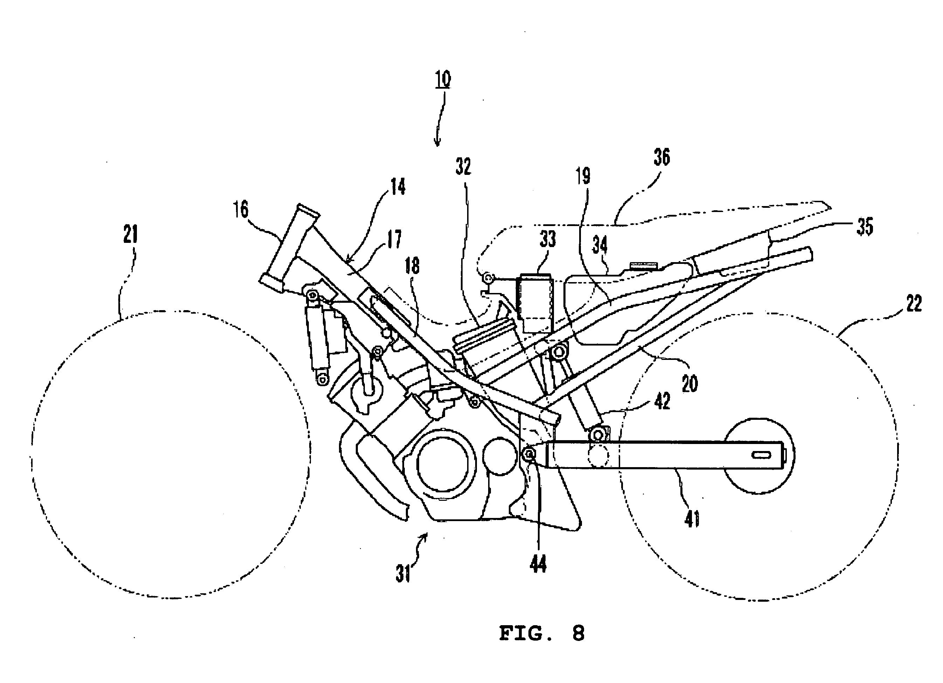

In a conventional motorcycle, various members such as a driving member (power unit), a seat, and various electric components are mounted on a body frame, such as is disclosed in, for example, JP-A-2006-88892. The arrangement disclosed in JP-A-2006-88892 is shown in Figure 8, which shows a frame 14 of a motorcycle 10, wherein the frame 14 is provided with a head pipe 16, a main tube 17, left and right down tubes 18, and left and right seat rails 19. Further, the frame 14 shown in FIG. 8 is provided with left and right backstays 20. The main tube 17 is a structural member extending obliquely downward to the rear of a vehicle body from the head pipe 16. The down tubes 18 are attached to a lower part of the main tube 17 and extend to the left rear and the right rear of the vehicle body. In the illustrated example of the prior art, the left and right seat rails 19 are respectively coupled to the left and right down tubes 18. In FIG. 8, reference numeral 21 denotes a front wheel, and reference numeral 22 denotes a rear wheel (drive wheel).

Although such a frame of the motorcycle 10 generally has a symmetrical structure, an asymmetrical frame is also known, for example from JP-A-2001-301678. This document discloses that left and right seat rail frames are formed asymmetrically to a centerline of the vehicle width. Specifically, as shown in FIG. 4 of the Patent Document, each of a left and a right seat rail frames 8L, 8R is welded to a bracket 9 at its front end. The brackets 9 are welded to a left and a right rear ends of a down tube 7. The left and the right seat rail frames 8L, 8R are curved in an arc shape at the front ends, extend to the rear of the vehicle body in parallel with each other, and are bent in a V shape in the middle so as to extend outward in a plan view. A bent part of the left seat rail frame 8L is located toward the front from a bent part of the right seat rail frame 8R in the vehicle body. Thereby, it is disclosed that the workability of taking a helmet in and out of a storage box can be improved.

In JP-A-2001-301678, the left and the right seat rails are partially in the asymmetrical shapes merely from a viewpoint of improving the workability of taking the helmet in and out of the storage box.

Including the motorcycle disclosed in JP-A-2001-301678, in the frame 14 of the motorcycle 10, as shown in FIG. 8, a power unit 31, an air cleaner 32, an electric component 33, a fuel tank 34, a storage case 35, a seat 36, a swing unit 41, and a cushion unit 42 are provided in an area surrounded by the left and the right down tubes 18, and the left and the right seat rails 19 via the cross member and the brackets. Accordingly, the seat rails 19 are formed to bulge out into the left and right of the vehicle in an arch shape so as to form a larger area surrounded by the left and the right down tubes 18 and the seat rails 19. Therefore, the vehicle is expanded in a width direction, and thus occasionally gives a further massive impression. Consumers of the motorcycle 10 have a taste that differs by individual, country, and region, or that is influenced by a trend. There is a case that consumers prefer a slim vehicle in the width direction.

Also, the frame 14 of the known motorcycle 10 has to secure the necessary rigidity and a space for disposing components such as the power unit 31, the air cleaner 32, the electric component 33, the fuel tank 34, and the storage case 35.

Another frame assembly for a motorcycle is described in WO2004/071858, which describes a frame assembly comprising a head pipe, a down tube, a left side tube, a right side tube, a cross pipe, a sheet pipe, and a rectangular pipe frame. The left side tube and the right side tube comprise front end parts connected to the down tube and are curved on the side faces of a vehicle. The pipe frame is connected to the rear end part of the left side tube. The cross pipe connects the left side tube to the right side tube. The sheet pipe comprises a front end part connected to the rise part of the pipe frame and a rear end part connected to the rear end part of the pipe frame through a reinforcement plate.

### SUMMARY OF THE INVENTION

A motorcycle frame according to an aspect of the present invention is provided with a main tube extending obliquely downward to the rear of a vehicle body from a head pipe, a left and a right down tubes respectively extending to the left rear and the right rear of the vehicle body from a lower part of the main tube, and seat rails for supporting a seat in the rear of the down tubes. The seat rails are disposed on the left and right of the vehicle body. One of the left and the right seat rails is coupled with rigidity to the main tube at its front end, and the other seat rail is coupled to the down tube at its front end.

In one embodiment, the head pipe may be disposed along a center plane in a vehicle width direction, and the main tube may be inclined from the head pipe with respect to the center plane in the vehicle width direction.

An inter-rail cross member spanned in a width direction may be provided in at least one place between the left and the right seat rails. In this case, it is preferable that the inter-rail cross members be disposed in front parts of the seat rails and in rear parts thereof.

According to a further aspect of the present invention there is provided a motorcycle frame comprising:
a main tube extending obliquely downward and rearward of a head pipe;
left and right down tubes extending rearward and respectively leftward and rightward from a lower part of the main tube; and
left and right seat rails for supporting a seat in the rear of the down tubes,
wherein a front end of one of the left and the right seat rails is coupled to the main tube, and a front end of the other seat rail is coupled to the down tube.

The frame may further comprise an inter-tube cross member coupling rear parts of the left and the right down tubes. The front end of the seat rail which is coupled to the down tube may be coupled to said down tube via the inter-tube cross member.

The head pipe may be disposed along a center plane in a vehicle width direction, and the main tube may be inclined from the head pipe with respect to the center plane in the vehicle width direction.

At least one of the down tubes may be coupled to another cross member coupled to the main tube.

The frame may further comprise an inter-rail cross member spanned in a width direction in at least one place between the left and the right seat rails.

Respective inter-rail cross members may be spanned in the width direction between front parts of the left and the right seat rails and between rear parts thereof.

Front ends of the left and right down tubes may be coupled to the main tube while being misaligned in a vertical direction.

According to another aspect of the present invention there is provided a motorcycle comprising a motorcycle frame according to any other aspect.

According to such a motorcycle frame as defined herein, one of the left and the right seat rails is coupled to the main tube at its front end, and the other seat rail is coupled to the down tube at its front end. Also, the seat rails extend asymmetrically on the left and the right of the frame, and thus it is possible to effectively secure a space for disposing components. The adoption of such a motorcycle frame enables to make the vehicle slim in the width direction.

Also, the head pipe is disposed along the center plane in the vehicle width direction. In a case that the main tube is inclined from the head pipe with respect to the center plane in the vehicle width direction, a further large space can be formed below the main tube with the main tube being inclined with respect to the center plane in the vehicle width direction. Therefore, it is possible to mount the components around the main tube further effectively.

The inter-rail cross member spanned in the width direction is provided in at least one place between the left and the right seat rails. It becomes easy to secure rigidity required as a motorcycle frame with such configuration and is also possible to lighten the frame. Particularly, it is more effective if the inter-rail cross members are spanned between the front parts of the seat rails and between the rear parts thereof.

### BRIEF DESCRIPTION OF THE DRAWINGS

These and other aspects of the present invention will now be described, by way of example only, with reference to the accompanying drawings, in which:
FIG. 1 is a side view of a motorcycle equipped with a frame according to a first embodiment of the present invention;
FIG. 2 is a plan view showing the frame of the motorcycle according to the embodiment of the present invention;
FIG. 3 is a rear view of a rear end of a down tube seen from rear in a traveling direction of a vehicle;
FIG. 4 is a plan view showing a shaft support section;
FIG. 5 is a left side view of the frame of the motorcycle according to the embodiment of the present invention;
FIG. 6 is a right side view of the frame of the motorcycle according to the embodiment of the present invention;
FIG. 7 is a side view of a motorcycle equipped with a frame according to a second embodiment of the present invention; and
FIG. 8 is a side view of a frame of an known motorcycle.

### DETAILED DESCRIPTION OF THE DRAWINGS

A description will hereinafter be made of a frame structure of a motorcycle according to an embodiment of the present invention with reference to the drawings. It should be noted that members or portions that give the same effects are denoted by the same reference numerals and symbols in the drawings. Also, the present invention is not limited to the embodiment described below.

### Embodiment 1

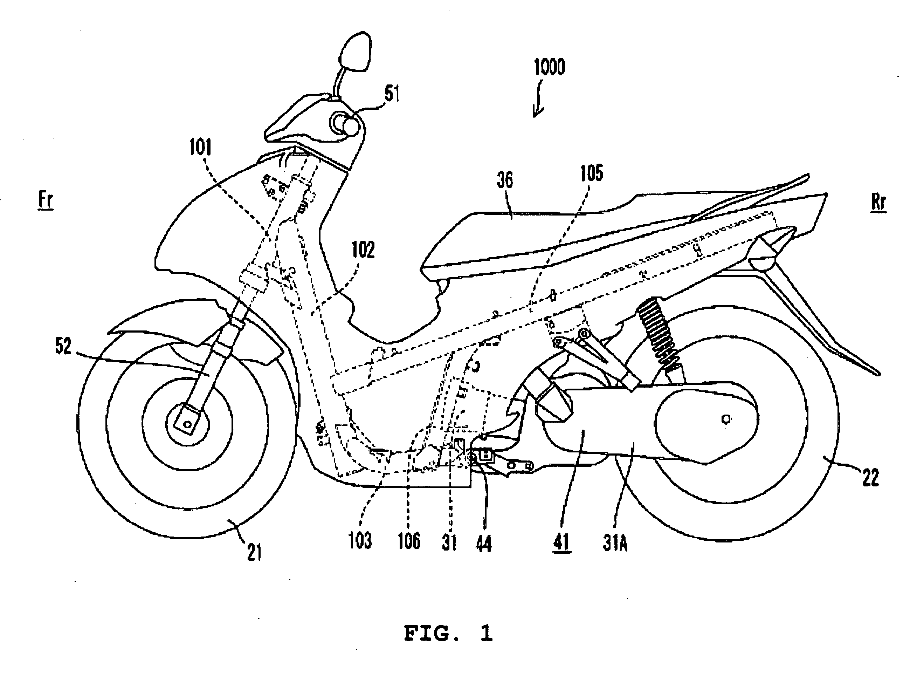

FIGs. 1 to 6 show the first embodiment of the present invention.

A motorcycle 1000 of this embodiment is, as shown in FIG. 1, one having a frame structure of a so-called underbone type.

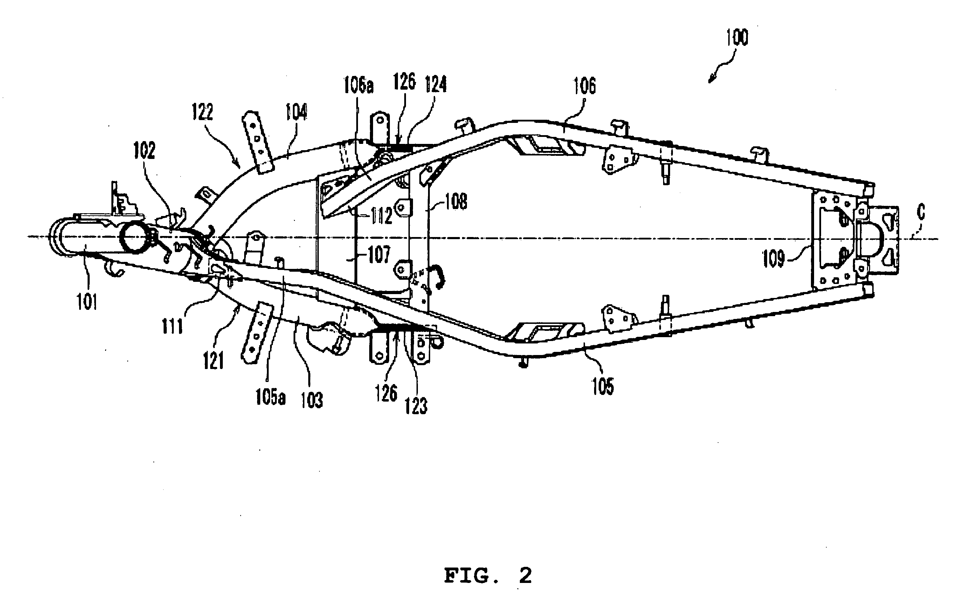

As shown in FIG. 2, a frame 100 of the motorcycle 1000 is provided with a head pipe 101, a main tube 102, left and right down tubes 103, 104, and left and right seat rails 105, 106. In this embodiment, the head pipe 101, the main tube 102, the left and right down tubes 103, 104, and the left and right seat rails 105, 106 are joined by means of welding. A coupling structure of each member is not limited to weld, but an appropriate method may be chosen accordingly in view of rigidity, durability, workability, a material of each member or the like.

Steering handlebars 51 and front forks 52 (see FIG. 1) , which are not shown in FIG. 2, are attached to the head pipe 101. Therefore, the head pipe 101 is disposed along a center plane c in a vehicle width direction.

The main tube 102 extends obliquely downward to the rear of a vehicle body from the head pipe 101. In this embodiment, an upper end of the main tube 102 is coupled to the head pipe 101, which is disposed along the center plane c in the vehicle width direction. However, the main tube 102 is disposed to be inclined with respect to the center plane c in the vehicle width direction. In this embodiment, as shown in FIG. 2, the main tube 102 is inclined to the left side in a traveling direction of the vehicle with respect to the center plane c in the vehicle width direction.

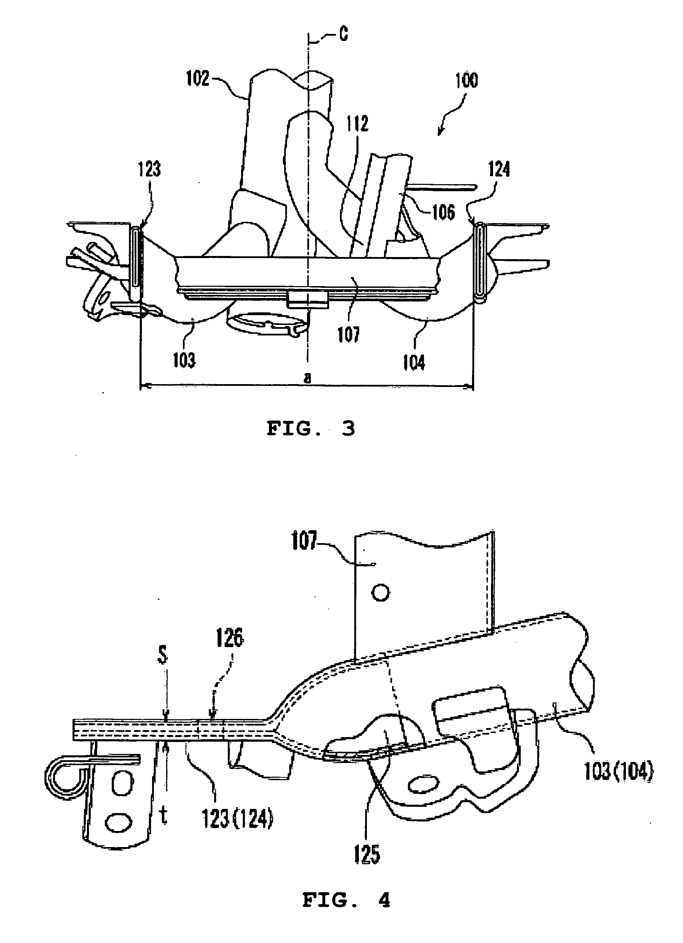

The left and right down tubes 103, 104 extend rearward and respectively leftward and rightward of the vehicle body from a lower part of the main tube 102 in a manner that a distance therebetween gradually increases. In this embodiment, the left and the right down tubes 103, 104 are curved toward the main tube 102, which is medially located, and are coupled to the lower part of the main tube 102. Positions on the main tube where the front ends of both the left and the right down tubes are coupled differ in terms of height (see FIG. 3). In this embodiment, the down tube 104, which is located on the right side in the traveling direction of the vehicle, is positioned higher than the down tube 103 on the left side.

Furthermore, because the main tube 102 is inclined to the left, front parts of the left and the right down tubes 103, 104 are in slightly different shapes from each other. The degree of curvature of the left down tube 103 is gentle compared to that of the right down tube 104.

In this embodiment, the left and the right shapes of the down tubes 103, 104 are adjusted by shapes of respective curved sections 121, 122 in the front region thereof. The down tubes 103, 104 are formed to be generally symmetrical with respect to the center plane in the vehicle width direction rearward of the curved sections 121, 122. Also, in this embodiment, an inter-tube cross member 107 for connecting the left and the right down tubes 103, 104 is coupled to rear parts of the down tubes 103, 104. The rigidity in the width direction between the left and the right down tubes 103, 104 is secured by the inter-tube cross member 107.

Shaft support sections 123, 124 for supporting a swing unit 41 are respectively formed at rear ends of the down tubes 103, 104. The swing unit 41 in the first embodiment is constituted with a unit that includes an engine 31, a driveline or transmission 31A for transmitting driving force of the engine 31 to a rear wheel, and a rear wheel 22 and that swings about a pivot shaft 44, which will be described later.

FIG. 3 is a view of the shaft support sections 123, 124 at the rear ends of the down tubes 103, 104 seen from the rear in the traveling direction of the vehicle. In the frame 100 in which the left and the right down tubes 103, 104 extend to the rear of the vehicle body from the lower part of the main tube 102 so as to gradually distance from each other, as shown in FIG. 2 and FIG. 3, width "a" that is broad to some extent can be secured between the rear end of the down tube 103 and that of the down tube 104. As described above, because the shaft support sections 123, 124 for attaching the swing unit 41 (see FIG. 1) are formed at the rear ends of the down tubes 103, 104, it is possible to support the swing unit 41 for the pivot movement at a position with the broader width. For example, when the vehicle travels along a curved path, torsional force acts on the shaft support sections 123, 124 via a rear wheel and a swing arm. Even in such a case where the force generating torsion is exerted from the swing unit 41 on the shaft support sections 123, 124, it is possible to support the swing unit 41 in a further stable condition due to the broadness of the shaft support sections 123, 124 for supporting the swing unit 41 for the pivot movement.

In this embodiment, the rear ends of the down tubes 103, 104 are pressed in a plate shape, and the shaft support sections 123, 124 for supporting the swing unit 41 for the pivot movement are formed in portions pressed in the plate shape.

In detail, in this embodiment, as shown in FIG. 4, each of the down tubes 103, 104 is made up of a hollow pipe. Further, another hollow pipe 125 is then inserted in the rear end of each of the down tubes 103, 104, and is overlapped with each of the down tubes 103, 104. The rear side from the midpoint of an overlapped portion is then pressed in the plate shape. In this embodiment, as shown in FIG. 4, the overlapped portion is pressed in directions of arrows s, t (from either side of the vehicle width direction). Then, each of the shaft support sections 123, 124 is formed in a portion that is pressed in the plate shape. In this embodiment, an attachment hole 126 for attaching the pivot shaft 44 (see FIG. 1) of the swing unit 41 is formed on each of the shaft support members 123, 124.

As described above, another hollow pipe 125 is inserted in the rear end of each of the down tubes 103, 104, and is overlapped with each of the down tubes 103, 104. The rear side from the midpoint of the overlapped portion is then pressed in the plate shape, and each of the shaft support sections 123, 124 is formed in the portion that is pressed in the plate shape. Accordingly, it is possible to improve strength of the shaft support sections 123, 124 and to improve durability of such portions.

Next, as shown in FIG. 2, the left and the right seat rails 105, 106 are members respectively disposed behind the down tubes 103, 104 and for supporting a seat 36 (see FIG. 1). The seat rails 105, 106 are respectively disposed on the left and the right of a vehicle. In this embodiment, a front end 111 of one of the left and the right seat rails 105, 106 (in this embodiment, the left seat rail 105) is coupled to the main tube 102. Also, the other seat rail (in this embodiment, the right seat rail 106) is coupled to the down tubes 103, 104 at its front end 112. In detail, the front end 112 of the other seat rail (the right seat rail 106) is coupled to the inter-tube cross member 107 spanned between the rear parts of the left and the right down tubes 103, 104. In this embodiment, the inter-tube cross member 107 falls into a concept of the down tubes 103, 104. However, the present invention is also applicable to a case that the inter-tube cross member 107 is not included and that the other seat rail is coupled to the down tube 104 on the right side in the traveling direction of the vehicle.

In this embodiment, the seat rail 106 coupled to the down tubes in a manner described above lets a portion 106a that hangs downward to extend slightly into the inner side, and thus permit the frame 100 to define a slim profile in the width direction. In addition, in this embodiment, the main tube 102 is inclined to the left with respect to the center plane c in the vehicle width direction, and the seat rail 105 on the inclined side of the main tube 102 is coupled to the main tube 102. That is, compared to a case where the seat rail 106, which is located on the opposite side from the inclined side of the main tube 102, is coupled to the main tube 102, it is possible to form a larger space along the center plane c in the vehicle width direction.

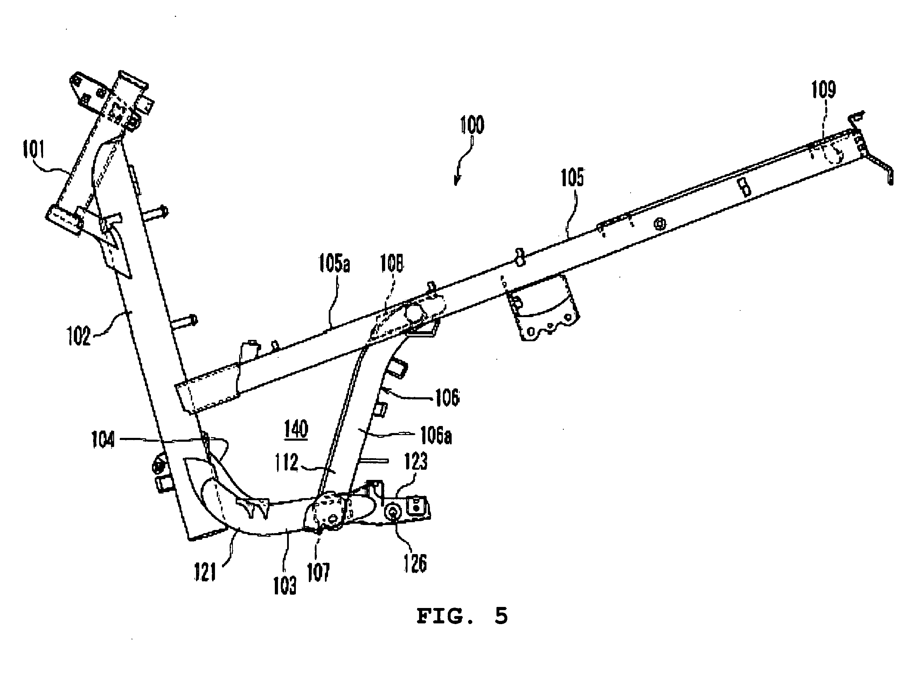

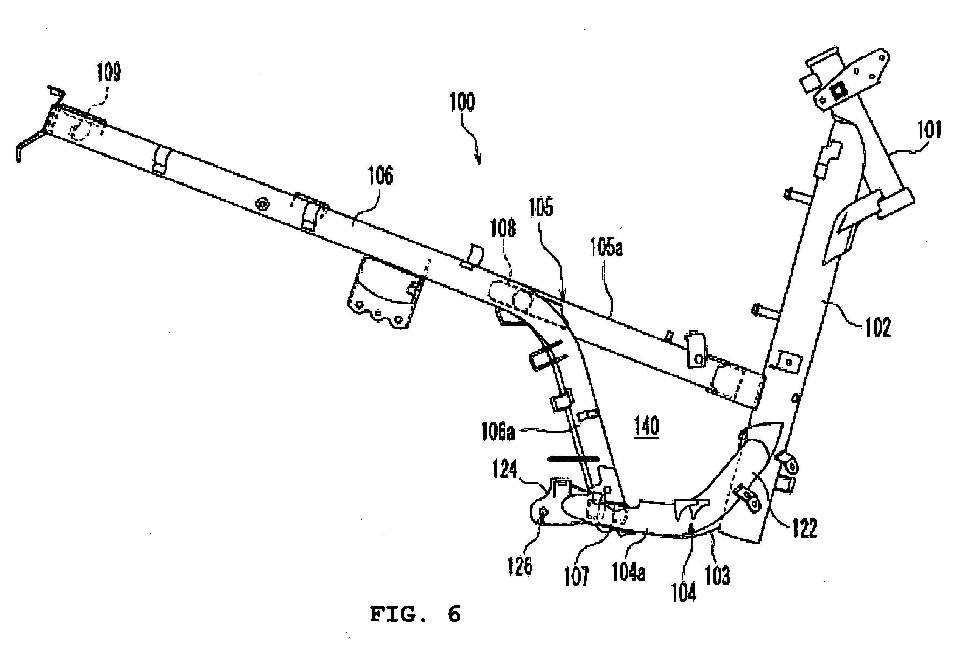

In other words, a path along which the left seat rail 105 extends is different from a path along which the right seat rail 106 extends in the side view. In this embodiment, as shown in FIG. 5, the left seat rail 105 extends forward to the main tube 102. Also, as shown in FIG. 6, the right seat rail 106 extends downward to the right down tube 104 while hanging down. Therefore, as shown in FIG. 2, it is possible to form a larger space for effectively mounting the components on the right side of a portion 105a in which the left seat rail 105 extends forward to the main tube 102 and on the left side of the portion 106a in which the right seat rail 106 hangs downward.

The inter-tube cross member 107 is spanned between the left and the right down tubes 103, 104. As shown in FIG. 2, first and second inter-rail cross members 108, 109 are spanned between the left and right seat rails 105, 106, respectively at the front and rear thereof in the width direction in order to couple the left and the right seat rails 105, 106. In addition to these cross members 107, 108, 109, in this embodiment, the seat rail 105 out of the left and the right seat rails 105, 106 is coupled to the main tube 102 at its front end, and the other seat rail 106 is coupled to the down tube 103 at its front end.

As described above, in this embodiment, one of the inter-tube cross member 107 and the first and second inter-rail cross members 108, 109 is spanned in at least one place in the width direction either between the left and right down tubes 103, 104 or between the left and the right seat rails 105, 106. The cross members 107, 108, 109 form a truss structure 140 together with the left and right down tubes 103, 104 and the left and the right seat rails 105, 106. In this embodiment, the truss structure 140 readily secures the rigidity required as the frame 100 of the motorcycle 1000, and it is possible to reduce the thickness of each frame constructional member required for obtaining the equivalent strength of the rigidity. Consequently, it is possible to lighten the frame 100 as a whole.

As described above, because the positions where the seat rails 105, 106 extend forward on the left and right are alternated, this frame 100 can effectively dispose the components. Thereby, the motorcycle 1000 as a whole can be made to define a slim profile in the width direction by adopting such a frame 100 of the motorcycle 1000.

In this embodiment, the head pipe 101 is disposed along the center plane c in the vehicle width direction, and the main tube 102 is inclined from the head pipe 101 with respect to the center plane c in the vehicle width direction. In this way, it is possible to form a larger space below the main tube 102 with the main tube 102 being inclined with respect to the center plane c in the vehicle width direction. Therefore, it is possible to mount a larger component than a conventional one to the portion, and to effectively mount the components around the main tube 102. For example, in this embodiment, because a large space can be secured around the main tube 102, it is possible to put together and dispose electric components connected to various switches and the like attached to a steering gear and handlebars. Consequently, the attachment work thereof can be facilitated.

### Embodiment 2

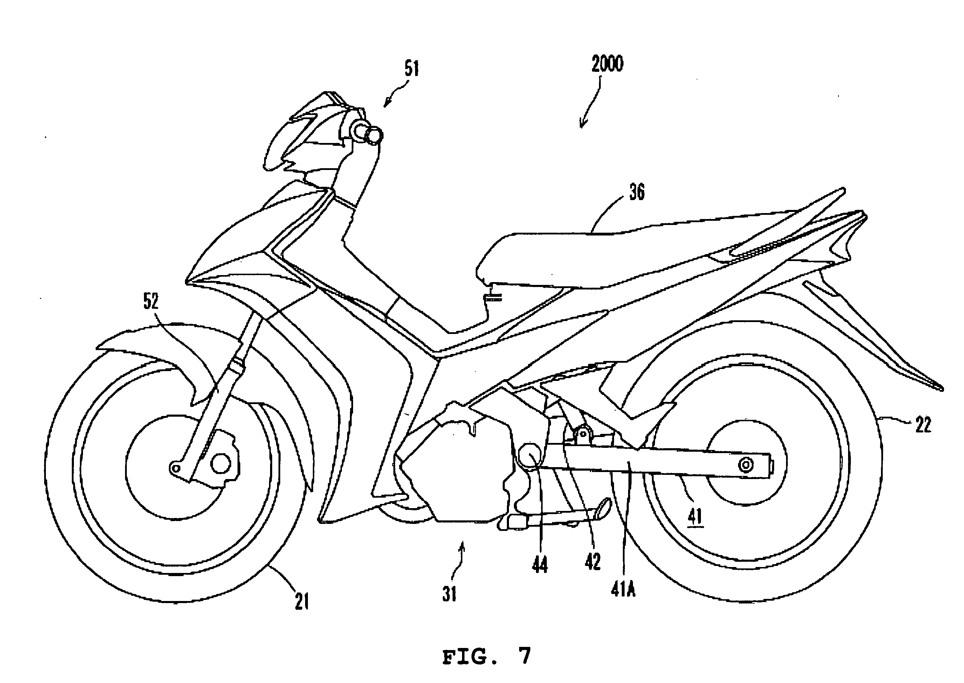

Fig. 7 shows a second embodiment. Members that give the same effects are denoted by the same reference numerals, and descriptions thereof will be omitted. The same frame structure as one in the first embodiment is adopted in a motorcycle 2000 in this second embodiment. The swing unit 41 in this embodiment is composed of an arm 41A, which swings about the pivot shaft 44, and the rear wheel 22.

So far the description has been made of the motorcycle frame according to both embodiments of the present invention; however, the motorcycle frame according to the present invention is not limited to the above embodiments.

For example, shapes of a head pipe, main tube, down tube, and seat rail are not limited to those described above. Specific shapes of the head pipe, the main tube, the down tube, and the seat rail may be appropriately modified in accordance with a vehicle. In addition, for example, one or more backstays may be further placed between the down tubes and the seat rails. The attachment positions of the cross members and the brackets can also be modified accordingly.

In both of the embodiments described above, the structure that the down tubes are directly welded to the main tube is illustrated; however, the structure for coupling the down tubes to the main tube is not limited to the above embodiments. For example, the cross member may be coupled to the main tube, and then the front ends of the down tubes may be coupled to the cross member. Further, the above embodiment illustrates a configuration that the inter-tube cross member 107 is spanned between the rear parts of the left and the right down tubes 103, 104 and that the front end 112 of the right seat rail 106 is coupled to the inter-tube cross member 107 and is coupled to the down tubes 103, 104 via the inter-tube cross member 107. As described above, the seat rail coupled to the down tubes may be coupled to the down tubes via the inter-tube cross member, which is spanned between the rear parts of the left and the right down tubes, or may be coupled directly to the down tubes. Furthermore, the configuration in which the main tube 102 is inclined to the left with respect to the center plane c in the vehicle width direction is illustrated; however, the main tube 102 may be disposed along the center plane c in the vehicle width direction, or may be inclined to the right with respect to the center plane c in the vehicle width direction. Moreover, in the above embodiment, the seat rail 105 on the inclined side of the main tube 102 is coupled to the main tube 102; however, the seat rail 106 on the opposite side from the inclined side of the main tube 102 may be coupled to the main tube 102.

Such a frame can be adopted to various types of motorcycle frames. Motorcycles are not limited to underbone-type motorcycles, but the present invention is also applicable to, for example, scooter-type motorcycles.

The present invention can be utilized for a frame structure of a motorcycle.

### Description of Reference Numerals and Symbols

1000: motorcycle
100: frame
101: head pipe
102: main tube
103: left down tube
104: right down tube
105: left seat rail
106: right seat rail
107: inter-tube cross member
108, 109: first and second inter-rail cross members
140: truss structure
c: center plane in a vehicle width direction

## Claims

1. A motorcycle frame (100) comprising:
a main tube (102) extending obliquely downward and rearward of a head pipe (101);
left and right down tubes (103, 104) extending rearward and respectively leftward and rightward from a lower part of the main tube (102); and
left and right seat rails (105, 106) for supporting a seat (36),
wherein a front end of one of the left and the right seat rails (105, 106) is coupled with rigidity to the main tube (102), and a front end of the other seat rail (105, 106) is coupled to at least one of the down tubes (103, 104).

2. The motorcycle frame (100) according to Claim 1, further comprising an inter-tube cross member (107) coupling rear parts of the left and right down tubes (103, 104).

3. The motorcycle frame (100) according to claim 2, wherein the front end of the seat rail (105, 106) which is coupled to at least one of the down tubes (103, 104) is coupled to said down tube via the inter-tube cross member (107).

4. The motorcycle frame (100) according to Claim 1, 2 or 3, wherein the head pipe (101) is disposed along a center plane in a vehicle width direction, and the main tube (102) is inclined from the head pipe (101) with respect to the center plane in the vehicle width direction.

5. The motorcycle frame (100) according to any preceding Claim, wherein at least one of the down tubes (103, 104) is coupled to another cross member coupled to the main tube.

6. The motorcycle frame (100) according to any preceding Claim, further comprising an inter-rail cross member (108, 109) spanned in a width direction in at least one place between the left and the right seat rails (105, 106) .

7. The motorcycle frame (100) according to Claim 6, wherein respective inter-rail cross members (108, 109) are spanned in the width direction between front parts of the left and the right seat rails (105, 106) and between rear parts thereof.

8. The motorcycle frame (100) according to any preceding Claim, wherein front ends of the left and right down tubes (103, 104) are coupled to the main tube (102) while being misaligned in a vertical direction.

9. A motorcycle (1000) comprising a motorcycle frame (100) according to any preceding Claim.

## Patentansprüche

1. Motorradrahmen (100), der aufweist:
ein Hauptrohr (102), das sich schräg nach unten und nach hinten von einem Steuerrohr (101) erstreckt;
ein linkes und ein rechtes unteres Rahmenrohr (103, 104), das sich nach hinten und jeweils links und rechts von einem unteren Teil des Hauptrohres (102) aus erstreckt; und
eine linke und eine rechte Sitzschiene (105, 106) für das Tragen eines Sitzes (36),
wobei ein vorderes Ende von einer der linken und der rechten Sitzschiene (105, 106) starr mit dem Hauptrohr (102) verbunden ist, und wobei ein vorderes Ende der anderen Sitzschiene (105, 106) mit mindestens einem der unteren Rahmenrohre (103, 104) verbunden ist.

2. Motorradrahmen (100) nach Anspruch 1, der außerdem eine Zwischenrohrquerstrebe (107) aufweist, die die hinteren Teile des linken und des rechten unteren Rahmenrohres (103, 104) verbindet.

3. Motorradrahmen (100) nach Anspruch 2, bei dem das vordere Ende der Sitzschiene (105, 106), das mit mindestens einem der unteren Rahmenrohre (103, 104) verbunden ist, mit dem unteren Rahmenrohr mittels der Zwischenrohrquerstrebe (107) verbunden ist.

4. Motorradrahmen (100) nach Anspruch 1, 2 oder 3, bei dem das Steuerrohr (101) entlang einer mittleren Ebene in einer Breitenrichtung des Fahrzeuges angeordnet ist, und bei dem das Hauptrohr (102) vom Steuerrohr (101) mit Bezugnahme auf die mittlere Ebene in der Breitenrichtung des Fahrzeuges geneigt ist.

5. Motorradrahmen (100) nach einem der vorhergehenden Ansprüche, bei dem mindestens eines der unteren Rahmenrohre (103, 104) mit einer weiteren Querstrebe verbunden ist, die mit dem Hauptrohr verbunden ist.

6. Motorradrahmen (100) nach einem der vorhergehenden Ansprüche, der außerdem eine Zwischenschienenquerstrebe (108, 109) aufweist, die in einer Breitenrichtung an mindestens einer Stelle zwischen der linken und der rechten Sitzschiene (105, 106) überbrückt.

7. Motorradrahmen (100) nach Anspruch 6, bei dem die jeweiligen Zwischenschienenquerstreben (108, 109) in der Breitenrichtung zwischen den vorderen Teilen der linken und der rechten Sitzschiene (105, 106) und zwischen deren hinteren Teilen überbrücken.

8. Motorradrahmen (100) nach einem der vorhergehenden Ansprüche, bei dem die vorderen Enden des linken und des rechten unteren Rahmenrohres (103, 104) mit dem Hauptrohr (102) verbunden sind, während sie in einer vertikalen Richtung versetzt sind.

9. Motorrad (1000), das einen Motorradrahmen (100) nach einem der vorhergehenden Ansprüche aufweist.

## Revendications

1. Cadre de motocyclette (100) comprenant:
un tube principal (102) s'étendant obliquement vers le bas et vers l'arrière d'un tube de direction (101);
des tubes gauche et droit inférieurs (103, 104) s'étendant vers l'arrière et vers la gauche et la droite, respectivement, à partir d'une partie inférieure du tube principal (102); et
des rails pour siège gauche et droit (105, 106) pour supporter un siège (36),
dans lequel une extrémité antérieure de l'un des rails pour siège gauche et droit (105, 106) est couplée rigidement au tube principal (102) et une extrémité antérieure de l'autre rail pour siège (105, 106) est couplée à au moins un des tubes inférieurs (103, 104).

2. Cadre de motocyclette (100) selon la revendication 1, comprenant, en outre, un élément transversal inter-tubes (107) couplant les parties postérieures des tubes gauche et droit inférieurs (103, 104).

3. Cadre de motocyclette (100) selon la revendication 2, dans lequel l'extrémité antérieure du rail pour siège (105, 106) qui est couplée à au moins un des tubes inférieurs (103, 104) est couplée audit tube descendant par le biais de l'élément transversal inter-tubes (107).

4. Cadre de motocyclette (100) selon la revendication 1, 2 ou 3, dans lequel le tube de direction (101) est disposé le long d'un plan central dans un sens de la largeur d'un véhicule et le tube principal (102) est incliné à partir du tube de direction (101) par rapport au plan central dans le sens de la largeur du véhicule.

5. Cadre de motocyclette (100) selon l'une quelconque des revendications précédentes, dans lequel au moins un des tubes inférieurs (103, 104) est couplé à un autre élément transversal couplé au tube principal.

6. Cadre de motocyclette (100) selon l'une quelconque des revendications précédentes, comprenant, en outre, un élément transversal inter-rails (108, 109) s'étendant dans un sens de la largeur en au moins un endroit entre les rails pour siège gauche et droit (105, 106).

7. Cadre de motocyclette (100) selon la revendication 6, dans lequel des éléments transversaux inter-rails respectifs (108, 109) s'étendent dans le sens de la largeur entre des parties antérieures des rails pour siège gauche et droit (105, 106) et entre des parties postérieures des rails.

8. Cadre de motocyclette (100) selon l'une quelconque des revendications précédentes, dans lequel les extrémités antérieures des tubes gauche et droit inférieurs (103, 104) sont couplées au tube principal (102), tout en étant désaxées dans une direction verticale.

9. Motocyclette (1000) comprenant un cadre de motocyclette (100) selon l'une quelconque des revendications précédentes.
